Europäisches Patentamt

European Patent Office

Office européen des brevets

(11) Publication number: **0 309 417**
**A1**

## EUROPEAN PATENT APPLICATION

(21) Application number: 88830355.9

(22) Date of filing: 06.09.88

(51) Int. Cl.⁴: **B 60 Q 1/04**

(30) Priority: 23.09.87 IT 5366687

(43) Date of publication of application:
29.03.89 Bulletin 89/13

(84) Designated Contracting States:
AT BE CH DE ES FR GB GR IT LI LU NL SE

(71) Applicant: I.DE.A. S.p.A. INSTITUTE OF DEVELOPMENT
IN AUTOMOTIVE ENGINEERING
Via Ferrero di Cambiano, 32
I-10024 Moncalieri (Torino) (IT)

(72) Inventor: Fantini Muzzarelli, Marco
Corso Einaudi, 3
I-10128 Torino (IT)

(74) Representative: Buzzi, Franco et al
c/o Jacobacci-Casetta & Perani S.p.A. Via Alfieri, 17
I-10121 Torino (IT)

(54) A retractable headlamp for motor vehicles.

(57) A retractable headlamp for motor vehicles, whose body (2) is movable between a retracted position and a raised position relative to a front compartment of the bodywork (V) by means of an articulated parallelogram structure (5) for supporting the body (2) of the headlamp in an operative position for illumination, both in the raised position and in the retracted position. The headlamp (1) can thus be used for its flashing function without having to be raised, the compartment (V) of the bodywork being provided with a frontal aperture (A) which faces the body of the headlamp when it is in the retracted position.

FIG. 1

EP 0 309 417 A1

**Description**

## A retractable headlamp for motor vehicles

The present invention relates to retractable headlamps for motor vehicles of the type comprising a headlamp body housed in a front compartment of the bodywork of a vehicle and movable relative to the compartment between a retracted position and an unretracted position, a lid element which is movable together with the headlamp body between a lowered position of closure of the bodywork compartment and a raised position in which the compartment is open, and operating means for moving the headlamp body and the lid element.

In conventional retractable headlamps of the type defined above, the headlamp body is normally made fast to the lid element and its movement from the retracted position to the unretracted position is effected by pivoting or simply by tipping the lid element between the closed position and the open position. The arrangement is such that, when the lid element is in the open position, the headlamp body is obviously disposed in its operative orientation for illumination, that is, with the lamp and the reflector facing fowards. Consequently, when the headlamp body is disposed in the retracted position with the lid element in the closed position, it is oriented downwardly and thus assumes an angular position which is unsuitable for frontal illumination. This prevents the driver from effecting a timely flashing operation if required, since this operation cannot be immediate but is delayed by the time necessary for the lid element to move from the closed position to the open position and dispose the headlamp body in the unretracted position at the correct orientation for illumination.

The object of the present invention is to avoid the above problem and to produce a retractable headlamp for motor vehicles of the type defined at the beginning, which is adapted to ensure immediate flashing even when it is in the retracted position within the compartment of the bodywork and thus without delays caused by its movement from the retracted position to the unretracted position.

According to the invention, this object is achieved by virtue of the fact that the operating means for moving the headlamp body and the lid element include:
an articulated parallelogram structure for supporting the headlamp body in the operative orientation for illumination, both in its unretracted position and in its retracted position relative to the bodywork compartment,
pivoting transmission means between the articulated parallelogram support structure and the lid element, and
actuator means for pivoting the parallelogram structure.

By virtue of this concept, the headlamp can be used for immediate flashing, even in its retracted position in the bodywork compartment, this compartment being provided with a front aperture which faces the headlamp body in its retracted position.

More precisely, the operating means conveniently comprise:
a rear support structure for the headlamp body and the lid element,
first and second arms which are parallel to each other and superposed, each having one end articulated to the support structure and its opposite end articulated to the headlamp body,
a support for the articulation of the rear part of the lid element to the rear support structure,
a third arm which pivotably interconnects the lid element and the middle part of the first arm, in front of the articulation support,
a connecting rod and crank mechanism connected to the middle part of the second arm.

Further characteristics of the invention will become clear in the course of the description which follows with reference to the appended drawings, provided purely by way of non-limiting example, in which:

Figure 1 is a schematic side elevational view of a retractable headlamp for motor vehicles according to the invention, illustrated in the retracted position, and

Figure 2 is a view similar to Figure 1 with the headlamp in the raised position.

With reference to the drawings, the front part of the bodywork of a motor car is indicated C and, on one side, has a compartment V provided for housing a rectractable headlamp, generally indicated 1.

The retractable headlamp 1 comprises a headlamp body 2 which includes, in generally known manner, a lamp carried by a reflector closed at the front by a transparent sheet, and is inserted in a support 3 connected to a support structure 4 fixed to the structure of the vehicle within the compartment V of the bodywork C. The connection between the support 3 and the support structure 4 is achieved by means of a pair of articulated parallelogram structures 5 arranged on opposite sides of the headlamp body 2, only one of which is shown in the drawings, the other being identical.

Each articulated parallelogram structure 5 comprises an upper arm 6 and a lower arm 7 which are parallel to each other and are each articulated at one end, at 8 and 9 respectively, to the support structure 4 and at the opposite end, at 10 and 11 respectively, to the upper part and to the lower part of the support 3. The articulation pins 8-11 extend horizontally and substantially transverse the longitudinal axis of the vehicle.

A lid element in the form of a pivoting cover, which is adapted to act as an upper closure element for the compartment V of the bodywork C, is indicated 12. The lid element 12 is articulated at its rear at 13 to an appendage 14 of the support structure 4, and is connected to the upper arm 6 of the parallelogram structure 5 by means of an arm 15 having one end articulated at 16 to the middle part of the upper arm 6 and its opposite end articulated at 17 to the lid element 12, in front of the articulation 13. The articulation pins 13, 16 and 17 are parallel to the articulation pins 8-11 of the parallelogram structure 5.

The upper end of an adjustable connecting rod stem 19 is articulated at 18 to the middle part of the lower arm 7 of the parallelogram structure 5, and its lower end is articulated at 20 to a crank 21.

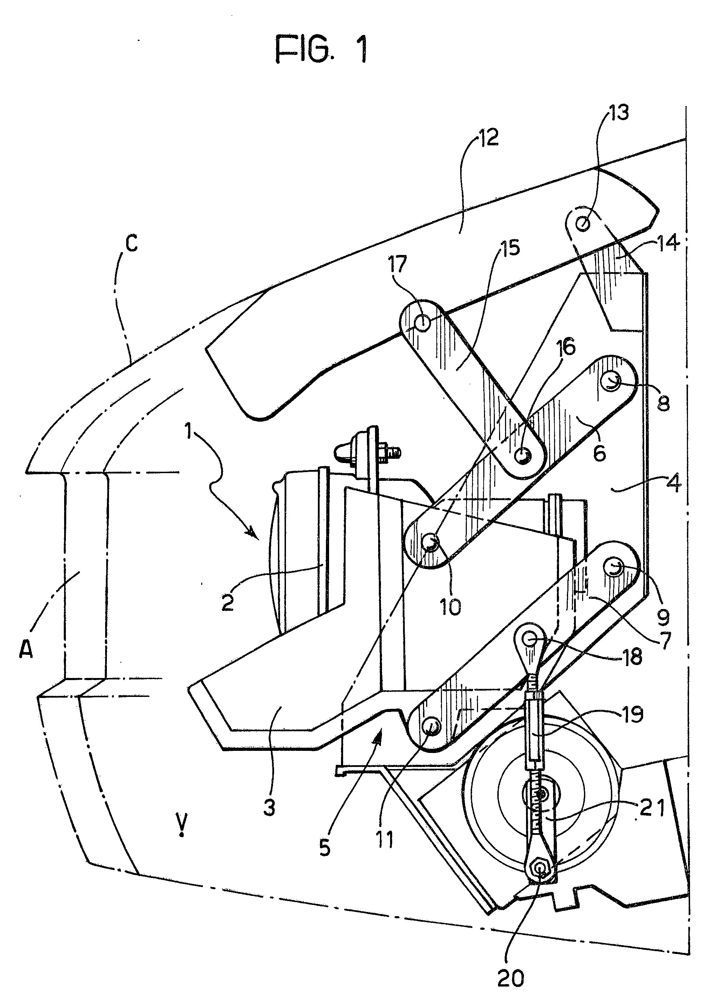

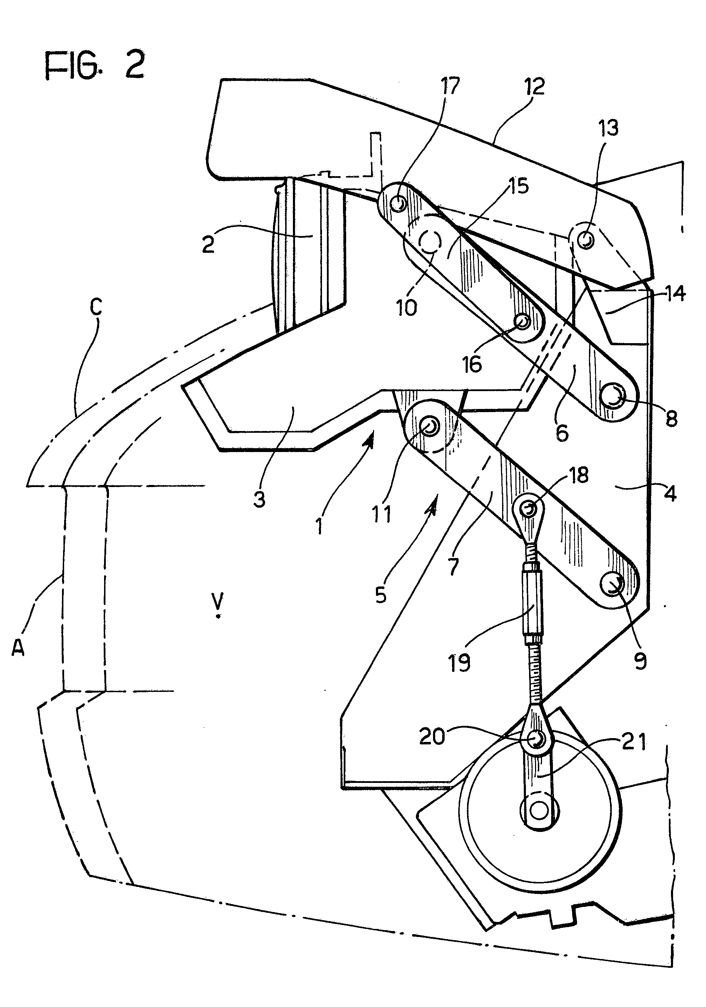

The connecting rod 20 and the crank 21 constitute an actuator device by means of which the headlamp 1 can be moved between its retracted position within the compartment V, illustrated in Figure 1, and its raised position from the compartment V, illustrated in Figure 2. In fact, the rotation of the crank 21, normally effected by means of a motor-driven actuator, not illustrated, causes pivoting of the lower arm 7, and hence of the support 3 and of the upper arm 6 of the parallelogram structure 5, between the lowered position illustrated in Figure 1 and the raised position illustrated in Figure 2, so that the movement of the headlamp body 2 between the retracted and the raised positions takes place with the body 2 being kept in its operative orientation for illumination, that is, with the body 2 constantly parallel to itself and facing forwards.

Simultaneously with the movement of the headlamp body 2, the arm 15 causes the lid element 2 to pivot between the lowered closed position of Figure 1 and the raised open position of Figure 2.

The fact that the headlamp body 2 is kept in its operative orientation for illumination even in its retracted position within the compartment V allows the headlamp to be flashed even when it is retracted within the compartment V, that is, without the need to bring it out of the compartment beforehand. To permit this flashing operation, the compartment V of the bodywork C is delimited at the front by an aperture A with a grille, which faces the headlamp body 2 when it is disposed in the retracted position.

**Claims**

1. A retractable headlamp for motor vehicles, comprising a headlamp body housed in a front compartment of the bodywork of a vehicle and movable relative to the compartment between a retracted and an unretracted position, a lid element which is movable together with the headlamp body between a position of closure of the bodywork compartment and a position in which the compartment is open, and operating means for moving the headlamp body and the lid element, characterised in that the operating means include:
an articulated parallelogram structure (5) for supporting the headlamp body (2) in its operative orientation for illumination, both in its unretracted position and in its retracted position relative to the compartment (V) of the bodywork (C),
pivoting transmission means (15) between the articulated parallelogram structure (5) and the lid element (12), and
actuator means (19, 21) for pivoting the parallelogram structure (5).

2. A headlamp according to Claim 1, characterised in that the operating means comprise:
a rear support structure (4) for the headlamp body (2) and the lid element (12),
first and second arms (6, 7) which are parallel to each other and superposed, each having one end (8,9) articulated to the rear support structure (4) and its opposite end (10, 11) articulated to the headlamp body (2),
means for the articulation (13, 14) of the rear part of the lid element (12) to the rear support structure (4),
a third arm (15) which pivotably interconnects the lid element (12) and the middle part (16) of the first arm (6), in front of the articulation means (13, 14), and
a motor-driven connecting rod and crank mechanism (19, 21) connected to the middle part (18) of the second arm (7).

3. A headlamp according to Claim 1 or Claim 2, characterised in that the compartment (V) of the bodywork (C) is delimited at the front by an aperture (A) with a grille, which faces the headlamp body (2) in its retracted position.

# FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 505 273  (HONDA GIKEN KOGYO K.K.)<br>* Figures 2,3,6,7 * | 1-3 | B 60 Q    1/04 |
| X | US-A-4 516 191  (MORIYAMA)<br>* Figures 4,5,8 * | 1,2 | |
| X | PATENT ABSTRACTS OF JAPAN, vol. 9, no. 60 (M-364)[1783], 16th March 1985; & JP-A-59 195 438 (MAZDA K.K.) 06-11-1984<br>* Abstract * | 1,2 | |
| X | PATENT ABSTRACTS OF JAPAN, vol. 7, no. 193 (M-238)[1338], 24th August 1983; & JP-A-58 93 638 (NISSA JIDOSHA K.K.) 03-06-1983<br>* Abstract * | 1-3 | |
| X | PATENT ABSTRACTS OF JAPAN, vol. 7, no. 193 (M-238)[1338], 24th August 1983; & JP-A-58 93 637 (NISSAN JIDOSHA K.K.) 03-06-1983<br>* Abstract * | 1-3 | TECHNICAL FIELDS SEARCHED (Int. Cl.4)<br><br>B 60 Q |

The present search report has been drawn up for all claims

| Place of search | Date of completion of the search | Examiner |
|---|---|---|
| THE HAGUE | 20-12-1988 | ONILLON C.G.A. |